# EUROPEAN PATENT APPLICATION

(11) **EP 2 345 955 A1**
(43) Date of publication of application: **20.07.2011**
(21) Application number: 09823494.1
(22) Date of filing: 20.10.2009
(51) Int. Cl.: G06F 3/048, H04M 1/247

(54) **MOBILE INFORMATION TERMINAL**

(30) Priority: 30.10.2008 JP 2008279891
(71) Applicant: Sharp Kabushiki Kaisha, Osaka-shi, Osaka 545-8522 (JP)
(72) Inventor: MIYATA, Yuhsuke, Osaka-shi, Osaka 545-8522 (JP)
(74) Representative: Müller - Hoffmann & Partner
(86) International application number: PCT/JP2009/068066
(87) International publication number: WO 2010/050382

(57) **Abstract**

To provide a mobile information terminal that makes it easy to view a menu screen including many thumbnail images and improves operability at the time of selecting a thumbnail image.

The mobile information terminal is configured to be provided with: a thumbnail menu display part 22 that sterically arranges many thumbnail images 12 in the same direction in a virtual space to display the thumbnail images 12 on a thumbnail screen 3a as if the thumbnail images 12 are viewed from an oblique direction; a slide operation detection part 23 that detects a slide operation on a pad surface of a touch pad 8; a pointer display part 24 that, on the basis of the slide operation, moves a pointer 14 on the thumbnail screen 3a; and a thumbnail selection part 26 that, on the basis of a decision operation by a user, selects a thumbnail image 12 at a position of the pointer 14.

## Description

### TECHNICAL FIELD

The present invention relates to a mobile information terminal, and more particularly, to improvement of a mobile information terminal that displays many thumbnail images on a menu screen.

### BACKGROUND ART

It is conventional that, by preliminarily registering, as thumbnail images, reduced images that are created with being respectively related to data files, the thumbnail images are displayed as selection items on a menu screen for selecting the data files. For example, patent literature 1 discloses a technique in which thumbnail images belonging to the same category are arranged in vertical and horizontal directions, and in a depth direction, thumbnail images belonging to different categories are arranged. An information browsing apparatus described in Patent literature 1 makes it easy to view a menu screen including thumbnail images belonging to a plurality of categories by hierarchically differentiating and displaying the thumbnail images corresponding to data files belonging to the different categories in the depth direction.

However, what can be directly selected by operating a direction key is only any of thumbnail images belonging to a hierarchy on a forefront side, and to select a thumbnail image belonging to another hierarchy, the menu screen should be scrolled in the depth direction, i.e., there is a problem of poor operability.
Patent literature 1: JP-A-2006-301871

### DISCLOSURE OF THE INVENTION

### PROBLEM TO BE SOLVED BY THE INVENTION

The present invention is made in consideration of the above-described situation, and intended to provide a mobile information terminal that makes it easy to view a menu screen including many thumbnail images and improves operability at the time of selecting a thumbnail image. In particular, the present invention is intended to provide a mobile information terminal in which thumbnail images sterically arranged in the same direction in a virtual space are displayed on a menu screen as if the thumbnail images are viewed from an oblique direction, and any of thumbnail images currently displayed not only in a forefront stage but in a second or subsequent stage can be directly selected.

### MEANS ADAPTED TO SOLVE PROBLEMS

A mobile information terminal according to a first present of the present invention is configured to be provided with: thumbnail menu display means adapted to sterically arrange many thumbnail images in the same direction in a virtual space to display the thumbnail images on a menu screen as if the thumbnail images are viewed from an oblique direction; slide operation detection means adapted to detect a slide operation on a pad surface; pointer display means adapted to, on the basis of the slide operation, move a pointer on the menu screen; and thumbnail selection means adapted to, on the basis of a decision operation by a user, select a thumbnail image at a position of the pointer.

According to such a configuration, the thumbnail images sterically arranged in the same direction in the virtual space are displayed on the menu screen as if the thumbnail images are viewed from the oblique direction, and therefore the menu screen including the many thumbnail images can be easily viewed. Further, if the pointer is moved to a desired position by the slide operation on the pad surface and the decision operation is performed, a thumbnail image at a position of the pointer can be selected, and therefore a thumbnail image currently displayed not only in a forefront stage but in a second or subsequent stage can be directly selected. Accordingly, operability at the time of selecting a thumbnail image on the menu screen can be improved.

A mobile information terminal according to a second aspect of the present invention is configured to be provided with, in addition to the above-described configuration, menu screen scroll means adapted to move a currently displayed thumbnail image in a front-back direction in the virtual space to scroll the menu screen, wherein the thumbnail menu display means displays a thumbnail image in a forefront stage behind a thumbnail image in a rearmost stage. According to such a configuration, behind the thumbnail image in the rearmost stage, the thumbnail image in the forefront stage is displayed, and therefore there can be improved operability at the time of displaying the thumbnail image in the forefront stage from the state where the thumbnail image near the rearmost stage is displayed.

A mobile information terminal according to a third aspect of the present invention is configured to be provided with: in addition to the above-described configuration, a display on which the menu screen is displayed and terminal state determination means adapted to determine whether the display is in a vertically long state or a horizontally long state, wherein the thumbnail menu display means adjusts an interval between thumbnail images in front and rear stages on the basis of a result of a determination by the terminal state determination means. According to such a configuration, on the basis of a result of the determination whether the display is in the vertically long state or the horizontally long state, the interval between the thumbnail images in the front and rear stages is adjusted, and therefore the interval between the front and rear stages in the horizontally long state can be automatically made wider than that in the vertically long state. Accordingly, in the case where the display is in the horizontally long state, discrimination among thumbnail images currently displayed in the second and subsequent stages can be easily made, and any of the thumbnail images can be easily selected.

A mobile information terminal according to a fourth aspect of the present invention is configured such that, in addition to the above-described configuration, the thumbnail menu display means adjusts, on the basis of a user operation, a size of a thumbnail image currently displayed in a forefront stage. According to such a configuration, the thumbnail image currently displayed in the forefront stage can be reduced by the user operation, so that discrimination among thumbnail images currently displayed in the second and subsequent stages can be easily made as necessary, and any of the thumbnail images can be easily selected.

A mobile information terminal according to a fifth aspect of the present invention is configured such that, in addition to the above-described configuration, when the thumbnail menu display means displays respective thumbnail images with adding common background plates, the thumbnail menu display means arranges a thumbnail image currently displayed in a forefront stage in a center of the background plate, and arranges a thumbnail image currently displayed in a second or subsequent stage with displacing the thumbnail image to an end part of the background stage. According to such a configuration, the respective thumbnail images are displayed with being added with the common background plates, and therefore discrimination between hierarchies in front and rear stages at the time of displaying vertically or horizontally long thumbnail images in the front and rear stages can be improved. At this time, the thumbnail images currently displayed in the second and subsequent stages are arranged with being respectively displaced to the end parts of the background plates, and therefore discrimination among the thumbnail images currently displayed in the second and subsequent stages can be easily made.

A mobile information terminal according to a sixth aspect of the present invention is configured to provided with, in addition to the above-described configuration, focus display means adapted to focus-display a thumbnail image selected by the thumbnail selection means, wherein the thumbnail menu display means changes a viewpoint such that a focus-displayed thumbnail image is positioned on a front side. According to such a configuration, the viewpoint is changed so as to position the focus-displayed thumbnail image on the front side, so that discrimination among thumbnail images displayed behind the focus-displayed thumbnail image can be easily made, and any of the thumbnail images can be easily selected.

A mobile information terminal according to a seventh aspect of the present invention is configured to be provided with: thumbnail menu display means adapted to sterically arrange many thumbnail images in the same direction in a virtual space to display the thumbnail images on a menu screen as if the thumbnail images are viewed from an oblique direction; touch operation detection means adapted to detect a touch operation onto the menu screen; and thumbnail selection means adapted to, on a basis of a result of a detection of the touch operation, select a thumbnail image.

According to such a configuration, the thumbnail images sterically arranged in the same direction in the virtual space are displayed on the menu screen as if they are viewed from the oblique direction, and therefore the menu screen including the many thumbnail images can be easily viewed. Further, a desired-thumbnail image can be selected by the touch operation onto the menu screen, and therefore a thumbnail image currently displayed not only in the forefront stage but in the second or subsequent stage can be directly selected. Accordingly, operability at the time of selecting a thumbnail image on the menu screen can be improved.

### EFFECT OF THE INVENTION

According to the mobile information terminal of the present invention, the thumbnail images sterically arranged in the same direction in the virtual space are displayed on the menu screen as if the thumbnail images are viewed from the oblique direction, and therefore the menu screen including the many thumbnail images can be easily viewed. Further, the thumbnail image displayed not only in the forefront stage but in the second or subsequent stage can be directly selected, and therefore operability at the time of selecting a thumbnail image on the menu screen can be improved.

### BEST MODE FOR CARRYING OUT THE INVENTION

### First embodiment

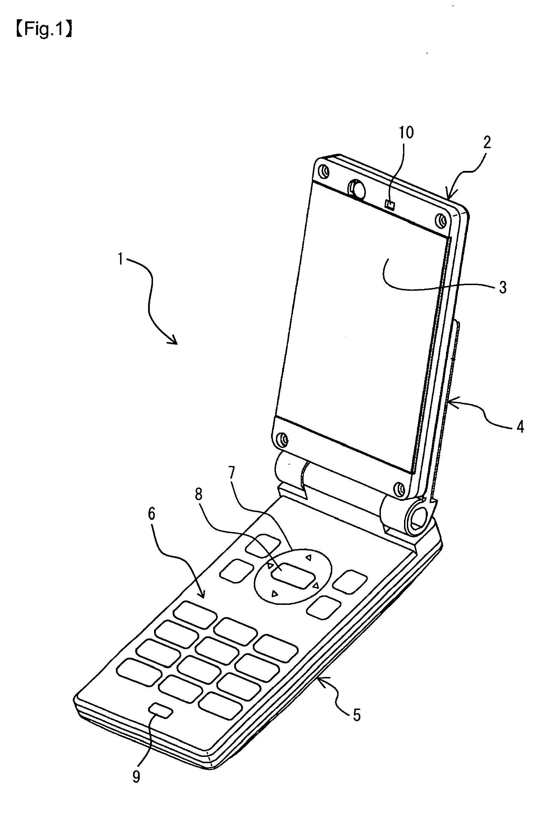

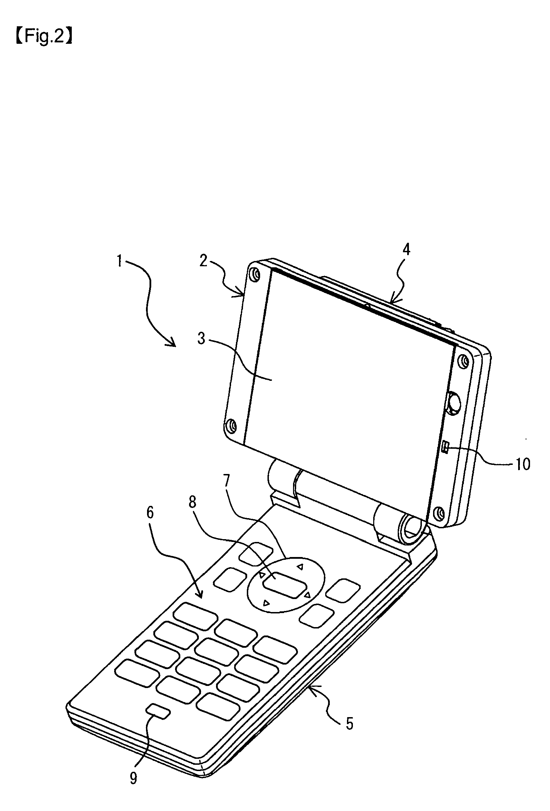

Figs. 1 and 2 are perspective views illustrating an example of a schematic configuration of a mobile information terminal according to the first embodiment of the present invention, in which as an example of the mobile information terminal, a flip-type cellular phone 1 is illustrated. Fig. 1 illustrates an appearance with bringing a display 3 of a display housing 2 into a vertically long state, and Fig. 2 illustrates an appearance with rotating the display housing 2 to bring the display 3 into a horizontally long state.

The cellular phone 1 includes the thin type display housing 2 having the display 3, a thin type operation housing 5 having operation keys 6 and 7, and a hinge part 4 that rotatably connects the display housing 2 and the operation housing 5 to each other.

The display 3 is arranged on one main surface of the display housing 2, and in a rectangular shaped display area thereof, a menu screen including many thumbnail images, or the like, is displayed. The display housing 2 is arranged with a receiver 10 in an end part that is positioned on a side opposite to the hinge part 4 when the display 3 is brought into the vertically long state.

The operation housing 5 is arranged with the operation keys 6 such as a ten-key, on-hook key, and off-hook key, a direction key 7, a touch pad 8, and a transmitting microphone 9. The operation keys 6 and direction key 7 are input devices each including a switch of a contact switching type. The direction key 7 serves as an operation key that enables input to be variously provided depending on a pressing site located on a left, right, top, or bottom side thereof.

The touch pad 8 is an input device that has a rectangular shaped pad surface and enables a pointer or icon on the menu screen to be operated by touching the pad surface with a finger. It is assumed herein that, as the touch pad 8, there is used an electrostatic sensor that detects a touch operation on the basis of a variation in electrostatic capacitance generated when a finger is brought close to the pad surface.

The cellular phone 1 can make a transition between an open state where both of the housings are expanded with a display surface and an operation surface facing in substantially the same direction and a close state (housed state) where both of the housings are folded with the display surface and the operation surface facing to each other. Further, in the open state, by rotating the display housing 2 by 90 degrees in a plane corresponding to the display surface with respect to the hinge part 4, the display 3 can be brought into the horizontally long state from the vertically long state.

In the cellular phone 1, there is performed operation that sterically arranges many thumbnail images in the same direction in a virtual space to display the thumbnail images on the menu screen as if the thumbnail images are viewed from an oblique direction.

### <Thumbnail image>

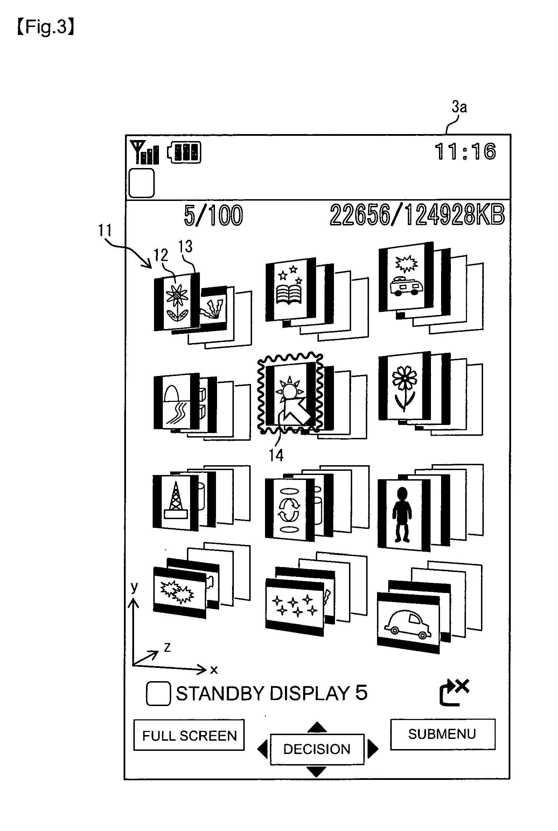

Fig. 3 is a diagram illustrating a configuration example of the cellular phone 1 in Fig. 1, in which an example of a thumbnail screen 3a displayed on the display 3 in the vertically long state is illustrated. The thumbnail screen 3a is a menu screen on which many thumbnails 11 are arrayed, on which the thumbnails 11 sterically arranged in the same direction in the virtual space are displayed as if they 11 are viewed from the oblique direction.

Each of the thumbnails 11 is a selection item that is formed by adding a predetermined background plate 13 to a thumbnail image 12 created with being related to a data file such as an image file. The thumbnail image 12 is a vertically or horizontally long still image or moving image for menu display, and in this example, an image formed by reducing a color image in a data file.

The background plate 13 is a regular shaped image having a regular shape and size that are common to each of the thumbnail images 12 on the thumbnail screen 3a, and added to the thumbnail image 12 in order to easily discriminate among hierarchies in front and rear stages. For example, a single color, in this example, a black and solid image is used as the background plate 13. The thumbnail image 12 is arranged in the center of the background plate 13.

In this example, in a horizontal direction (x-axis direction), vertical direction (y-axis direction), and depth direction (z-axis direction) with respect to the thumbnail images 12, three, four, and four thumbnails 11 are respectively arrayed, and 3 × 4 × 4 = 48 thumbnails 11 are displayed in total.

The respective thumbnails 11 are sterically arranged in this manner, and displayed (3D-displayed) as if the thumbnails 11 are viewed from a viewpoint in an oblique direction different from a front direction of the thumbnail images 12. In this example, thumbnails 11 on the right hand side are displayed so as to be positioned on a front side.

If a predetermined operation key 6 is operated, the thumbnails 11 currently displayed can be moved in the virtual space in a front-back direction, i.e., in the z-axis direction, to scroll the thumbnail screen 3a.

On the thumbnail screen 3a, there is displayed a pointer 14 that can be moved by a slide operation on the touch pad 8. The pointer 14 can be moved within the thumbnail screen 3a.

A tap operation onto the touch pad 8 or an operation of a decision key enables a thumbnail 11 at a position of the pointer 14 to be selected. That is, any thumbnail 11 currently displayed on the thumbnail screen 3a can be selected. The selected thumbnail 11 is focus-displayed in a display mode different from that of thumbnails 11 in a nonselective state.

Any of the thumbnails 11 currently displayed in a forefront stage can be selected also by operating the direction key 7. If the decision key is operated with any of the thumbnails 11 being selected, a data file related to the thumbnail 11 in a selective state can be opened, and for example, the image file can be browsed.

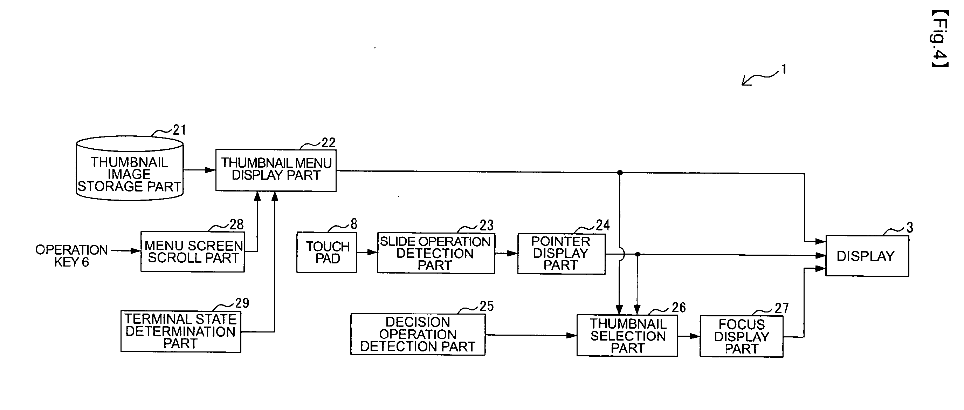

Fig. 4 is a block diagram illustrating the configuration example of the cellular phone 1 in Fig. 1, in which an example of a functional configuration inside the cellular phone 1 is illustrated. The cellular phone 1 is configured to be provided with, in addition to the display 3 and touch pad 8, a thumbnail image storage part 21, a thumbnail menu display part 22, a slide operation detection part 23, a pointer display part 24, a decision operation detection part 25, a thumbnail selection part 26, a focus display part 27, a menu screen scroll part 28, and a terminal state determination part 29.

The thumbnail menu display part 22 performs operation that controls the display 3 to display the thumbnail screen 3a on which the plurality of thumbnails 11 are arrayed. Specifically, there is performed the operation that sterically arranges the plurality of thumbnails 11 in the same direction in the virtual space to display the thumbnails 11 on the thumbnail screen 3a as if the thumbnails 11 are viewed from the viewpoint in the oblique direction.

The thumbnails 11 to be displayed on the thumbnail screen 3a are preliminarily created with being related to data files, and retained in the thumbnail image storage part 21.

The touch pad 8 is an electrostatic capacitance type touch sensor that, with use of a phenomenon in which an electrostatic capacitance between electrodes is varied by a user operation, detects a touch operation onto the pad surface. It is assumed herein that timings of the start and end of the touch operation, and an operation position within the pad surface are detected.

The slide operation detection part 23 performs operation that, on the basis of output of the touch pad 8, detects the slide operation on the pad surface. The pointer display part 24 performs operation that displays the pointer 14 on the thumbnail screen 3a, and on the basis of a result of the detection by the slide operation detection part 23, moves the pointer 14 on the thumbnail screen 3a. That is, by vertically or horizontally sliding a finger on the pad surface, the pointer 14 can be moved in a desired direction.

Note that the operation position on the touch pad 8 refers to a contact position at the time of bringing the finger into contact with the touch pad 8, and if the operation position is varied with retaining a contact state, it is determined that the slide operation has been performed. It is assumed that the contact state herein includes not only the case where the finger and the touch pad 8 are actually in abutting contact with each other, but also the case where the finger is slightly away from the touch pad 8.

The decision operation detection part 25 performs operation that detects the tap operation onto the pad surface of the touch pad 8, or the operation of the decision key. The tap operation refers to a touch operation that is performed without sliding a finger, and is discriminated from the slide operation that slides a finger during the touch operation.

The thumbnail selection part 26 performs operation that, on the basis of a result of the detection by the decision operation detection part 25, selects the thumbnail 11 at a position of the pointer 14. The focus display part 27 performs the operation that controls the display 3 to focus-display the thumbnail 11 selected by the thumbnail selection part 26 in the predetermined display mode.

The menu screen scroll part 28 performs the operation that moves the currently displayed thumbnails 11 in the front-back direction, i.e., in the z-axis direction, in the virtual space to scroll the thumbnail screen 3a. It is assumed herein that the thumbnail screen 3a is scrolled on the basis of the operation of the predetermined operation key 6.

In the thumbnail menu display part 22, there is performed operation that displays the thumbnails 11 in the forefront stage behind the thumbnails 11 in a rearmost stage. Based on this, there can be improved operability at the time of displaying the thumbnails 11 in the forefront stage from a state where thumbnails 11 near the rearmost stage are displayed.

The terminal state determination part 29 performs operation that determines whether the display 3 is in the vertically long state or the horizontally long state. In the thumbnail menu display part 22, on the basis of a result of the determination by the terminal state determination part 29, there is performed operation that adjusts an interval between thumbnails 11 in front and rear stages. Specifically, there is performed control that makes the interval between thumbnails 11 in front and rear stages for the case where the display 3 is in the horizontally long state wider than that for the case of the vertically long state. This enables the interval between front and rear stages in the horizontally long state to be automatically made wider than that in the vertically long state. Accordingly, when the display 3 is in the horizontally long state, discrimination among thumbnails 11 currently displayed in the second and subsequent stages can be easily made, and any of the thumbnails 11 can be easily selected.

Whether the display 3 is in the vertically long state or the horizontally long state can be discriminated by, for example, using a gravity sensor, which senses gravitational force, to sense whether the display housing 2 is in a raised state or a laid-down state. Alternatively, the discrimination can be made by using a magnetic sensor such as a Hall element to sense rotation of the display housing 2 with respect to the hinge part 4.

### <Scroll of thumbnail screen>

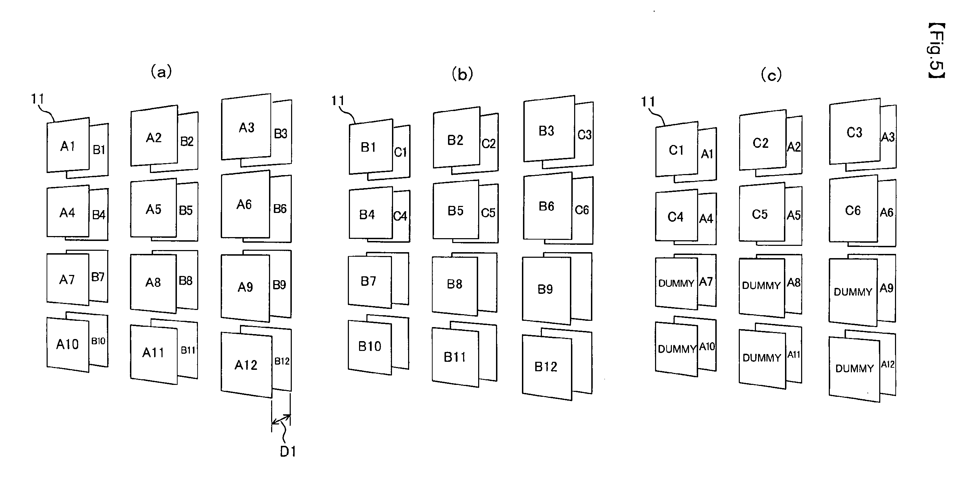

Figs. 5 (a) to (c) are explanatory diagrams schematically illustrating an example of operation during display of the thumbnail screen 3a in the cellular phone 1 in Fig. 1, in which an appearance of screen transition at the time of scrolling is illustrated. By operating the predetermined operation key 6, the currently displayed thumbnails 11 can be moved in the z-axis direction in the virtual space to scroll the thumbnail screen 3a.

For example, consider the case where, in the virtual space, twelve thumbnails 11 "A1" to "A12" are arranged in a first stage; twelve thumbnails 11 1 "B1" to "B12" are arranged in a second stage; and thumbnails "C1" to "C6" and dummy thumbnails 11 are arranged in a third stage. Also, in the case where only two hierarchies are displayed on the thumbnail screen 3a among the thumbnails, Fig. 5 (a) illustrates a state where the thumbnails 11 in the first and second stages are displayed.

If, in this state, the thumbnail screen 3a is scrolled in the z-axis direction by an amount corresponding to one hierarchy, the state transits to a state illustrated in Fig. 5 (b) in which the thumbnails 11 in the second and third stages are displayed. If the thumbnail screen 3a is further scrolled in the z-axis direction by the amount corresponding to one hierarchy, the state transits to a state illustrated in Fig. 5 (c) in which the thumbnails 11 in the third and first stages are displayed. As described, by displaying the thumbnails "A1" to "A12" in the forefront stage behind the thumbnails "C1"to "C6" in the rearmost stage, there can be improved operability at the time of displaying the thumbnails 11 in the forefront stage from the state where the thumbnails 11 near the rearmost stage are displayed.

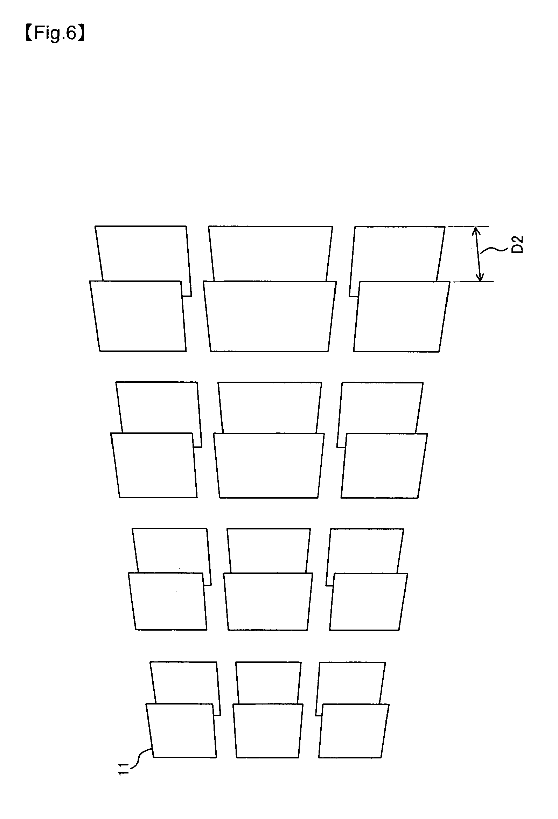

Fig. 6 is an explanatory diagram schematically illustrating an example of the operation during display of the thumbnail screen 3a is displayed in the cellular phone 1 in Fig. 1, in which an appearance of the thumbnail screen 3a for the case where the display 3 is brought into the horizontally long state is illustrated. On the basis of a result of the determination whether the display 3 is in the vertically long state or the horizontally long state, the interval between thumbnails 11 in front and rear stages is adjusted.

That is, there is performed the control that makes the interval D2 between the thumbnails 11 in the front and rear stages for the case where the display 3 is in the horizontally long state wider than the interval D1 for the case of the vertically long state. This enables the interval between the front and rear stages in the horizontally long state to be automatically made wider than that in the vertically long state. Accordingly, when the display 3 is in the horizontally long state, discrimination among thumbnails 11 currently displayed in the second and subsequent stages can be easily made, and any of the thumbnails 11 can be easily selected.

Also, not only the interval between thumbnails 11 in front and rear stages is adjusted, but depending on a terminal state, the number of thumbnails 11 in the x-axis, y-axis and z-axis direction, or a size of the thumbnail 11 may be adjusted.

According to the present embodiment, the thumbnails 11 sterically arranged in the same direction in the virtual space are displayed on the thumbnail screen 3a as if the thumbnails 11 are viewed from the viewpoint in the oblique direction, and therefore the menu screen including the many thumbnails 11 can be easily viewed. Further, if the pointer 14 is moved to a desired position by the slide operation on the pad surface to perform the decision operation, the thumbnail 11 at a position of the pointer 14 can be selected, and therefore any of thumbnails 11 currently displayed not only in the forefront stage but in the second or subsequent stage can be directly selected. Accordingly, operability at the time of selecting the thumbnail 11 on the menu screen can be improved.

### Second embodiment

In the first embodiment, there is described the example of the case where the pointer 14 on the thumbnail screen 3a is moved to select the thumbnail 11. On the other hand, in the present embodiment, there is described a case where the thumbnail 11 is selected by directly performing a touch operation onto the thumbnail screen 3a.

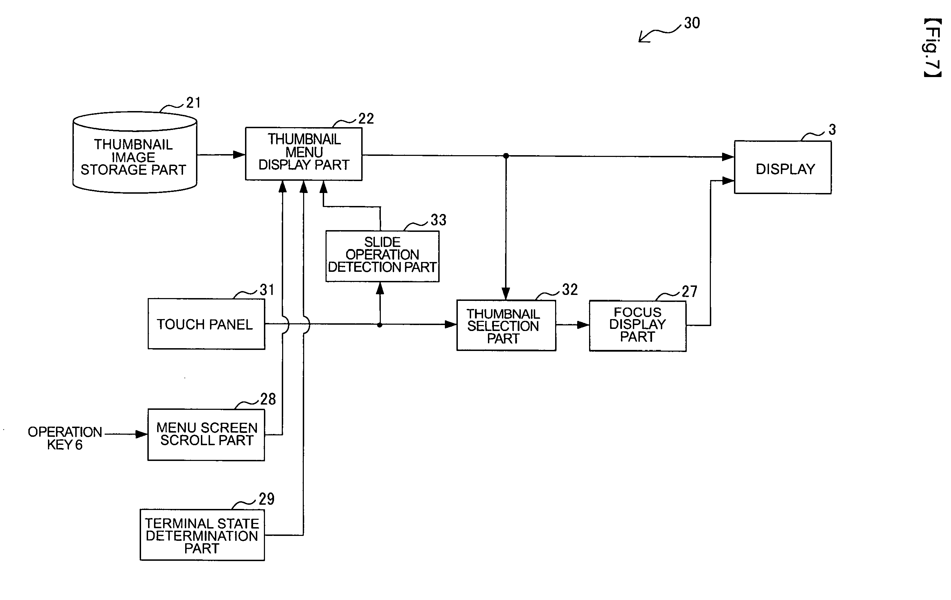

Fig. 7 is a block diagram illustrating a configuration example of a mobile information terminal 30 according to a second embodiment of the present invention. As compared with the cellular phone 1 in Fig. 4, the mobile information terminal 30 is different in that, in place of the touch pad 8, the slide operation detection part 23, the pointer display part 24, the decision operation detection part 25, and the thumbnail selection part 26, a touch panel 31, a thumbnail selection part 32, and a slide operation detection part 33 are provided.

The touch panel 31 is an electrostatic sensor that detects a touch operation onto a display surface of the display 3 on the basis of a variation in electrostatic capacitance generated when a finger is brought close to the display surface, and serves as touch operation detection means adapted to detect a touch operation onto the thumbnail screen 3a.

The thumbnail selection part 32 performs operation that, on the basis of a result of the touch operation detection by the touch panel 31, selects the thumbnail 11. Specifically, there is performed operation that selects the thumbnail 11 currently displayed at a position of the touch operation. This enables a desired thumbnail 11 to be selected by the touch operation onto the thumbnail screen 3a, and therefore any of thumbnails currently displayed not only a forefront stage, but in a second or subsequent stage can be directly selected.

The slide operation detection part 33 performs operation that, on the basis of output of the touch panel 31, detects a slide operation on the display surface of the display 3. In the thumbnail menu display part 22, there is performed operation that, on the basis of the above slide operation, adjusts a size of thumbnails 11 currently displayed in the forefront stage.

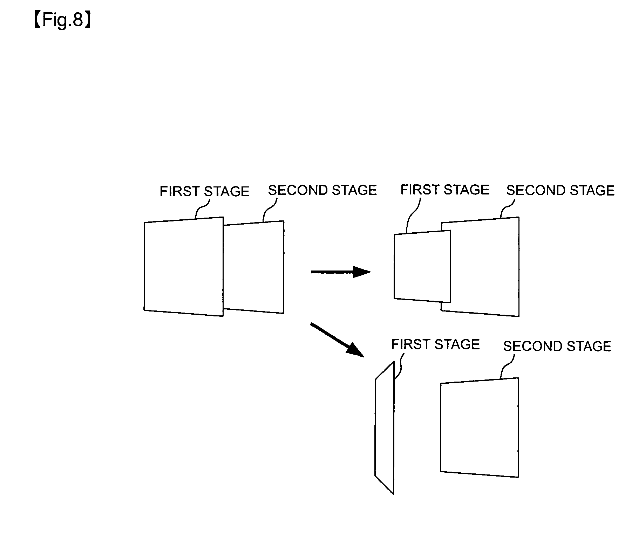

Fig. 8 is an explanatory diagram schematically illustrating an example of operation during display of the thumbnail screen 3a in the mobile information terminal 30 in Fig. 7, and illustrates an appearance in which the thumbnail 11 currently displayed in a first stage is reduced by the slide operation on the display surface.

If, in a state where the thumbnail 11 in the first stage and the thumbnail 11 in a second stage are displayed on the thumbnail screen 3a, a finger is slid in a predetermined direction on the thumbnail screen 3a, the thumbnail 11 in the first stage can be reduced. Based on this, the thumbnail 11 currently displayed in a forefront stage can be reduced by the slide operation, so that discrimination among thumbnails 11 currently displayed in a second and subsequent stages can be easily made as necessary, and any of the thumbnails 11 can be easily selected.

As a method for reducing the thumbnail 11 in the first stage, a method that decreases an image size with keeping a shape constant, a method that rotates the thumbnail 11 on a front side by a predetermined amount with use of a side of the thumbnail 11 on a rear side as a rotational axis, and other methods are possible.

Note that, in the first and second embodiments, there is described the example of the case where when the common background plate 13 is added to each of the thumbnail images 12, the thumbnail image 12 is arranged in the center of the background plate 13; however, the present invention is not limited to this. For example, in order to easily discriminate among thumbnail images 12 in the second and subsequent stages, the thumbnail images 12 currently displayed in the second and subsequent stages may be arranged with being respectively displaced to end parts of the background plates 13.

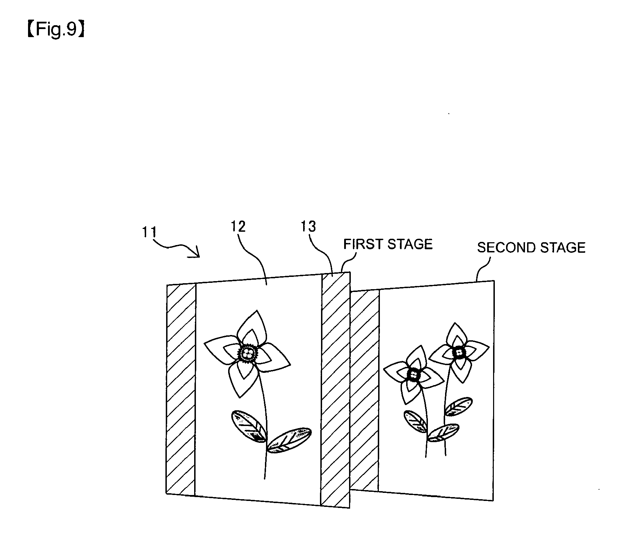

Fig. 9 is a diagram illustrating a configuration example of a mobile information terminal according to another embodiment of the present invention, and illustrates the thumbnail screen 3a on which the thumbnail image 12 in a second stage is arranged in an end part of the background plate 13.

When respective thumbnail images 12 are displayed with being added with the common background plates 13, the thumbnail image 12 currently displayed in a forefront stage is arranged in the center of the background plate 13, and thumbnail images 12 currently displayed in the second and subsequent stages are respectively arranged in the end parts of the background plates 13. At this time, the thumbnail images 12 in the second and subsequent stages are arranged on the front side.

Based on this, the thumbnail images 12 currently displayed in the second and subsequent stages are arranged with being respectively displaced to the end parts of the background plates 13, and therefore discrimination among the thumbnail images 12 currently displayed in the second and subsequent stages can be easily made.

Also, in the first and second embodiment, there is described the example of the case where the thumbnail 11 in the selective state is focus-displayed; however, the present invention is not limited to this. For example, a viewpoint may be changed so as to position a focus-displayed thumbnail 11 on the front side.

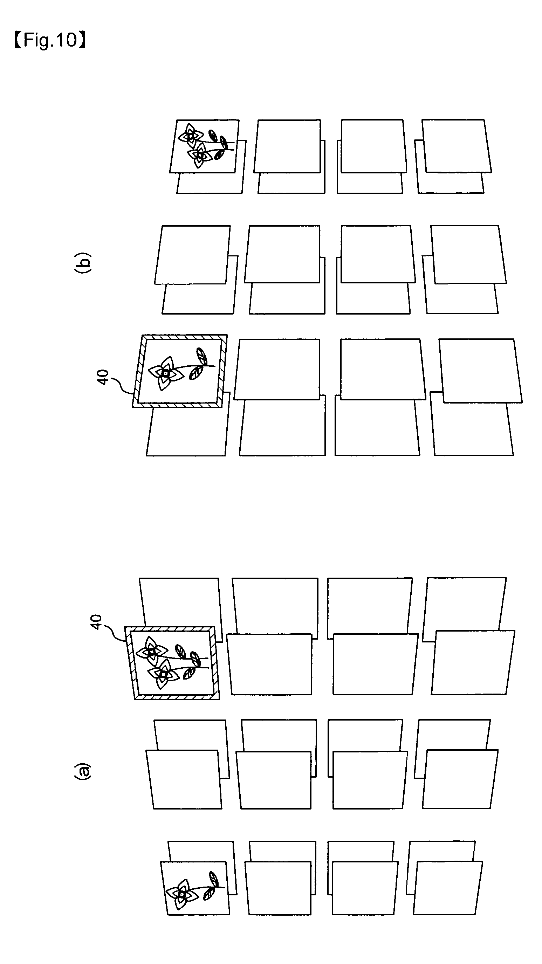

Fig. 10 (a) and (b) are diagrams illustrating a configuration example of a mobile information terminal according to still another embodiment of the present invention, each in which the thumbnail screen 3a displayed with a viewpoint being changed depending on whether the thumbnail 11 in a selective state is present on the extreme right or left is illustrated. Fig. 10 (a) illustrates a case where the thumbnail 11 on the extreme right in a forefront stage is selected and focus-displayed 40. Fig. 10 (b) illustrates a case where the thumbnail 11 on the extreme left in the forefront stage is selected and focus-displayed 40.

In the case where the thumbnail 11 on the extreme right in the forefront stage is selected and focus-displayed 40, the thumbnail 11 on the extreme right is displayed so as to be positioned on the forefront side. On the other hand, in the case where the thumbnail 11 on the extreme left in the forefront stage is selected and focus-displayed 40, the view point is changed such that the thumbnail 11 on the extreme left is positioned on the forefront side. Based on this, the view point is changed such that a focus-displayed thumbnail 11 is positioned on the front side, so that discrimination among thumbnails 11 displayed behind the focus-displayed thumbnail 11 can be easily made and any of the thumbnails 11 can be easily selected.

This application claims priority under the Paris Convention based on the following patent application in Japan: the patent application filed on October 30, 2008 (Japanese patent application No. 2008-279891), the entire content of which is incorporated herein by reference.

### BRIEF DESCRIPTION OF THE DRAWINGS

[Fig. 1] Fig. 1 is a perspective view illustrating an example of a schematic configuration of a mobile information terminal according to a first embodiment of the present invention, in which a cellular phone 1 with a display 3 brought into a vertically long state is illustrated.
[Fig. 2] Fig. 2 is a perspective view illustrating the example of the schematic configuration of the mobile information terminal according to the first embodiment of the present invention, in which the cellular phone 1 with the display 3 brought into a horizontally long state is illustrated.
[Fig. 3] Fig. 3 is a diagram illustrating a configuration example of the cellular phone 1 in Fig. 1, in which an example of a thumbnail screen 3a displayed on the display 3 in the vertically long state is illustrated.
[Fig. 4] Fig. 4 is a block diagram illustrating the configuration example of the cellular phone 1 in Fig. 1, in which an example of a functional configuration inside the cellular phone 1 is illustrated.
[Fig. 5] Fig. 5 is an explanatory diagram schematically illustrating an example of operation during display of the thumbnail screen 3a in the cellular phone 1 in Fig. 1, in which an appearance of screen transition at the time of scrolling is illustrated.
[Fig. 6] Fig. 6 is an explanatory diagram schematically illustrating an example of the operation during display of the thumbnail screen 3a in the cellular phone 1 in Fig. 1, in which an appearance of the thumbnail screen 3a in the horizontally long state is illustrated.
[Fig. 7] Fig. 7 is a block diagram illustrating a configuration example of a mobile information terminal 30 according to a second embodiment of the present invention.
[Fig. 8] Fig. 8 is an explanatory diagram schematically illustrating an example of operation during display of the thumbnail screen 3a in the mobile information terminal 30 in Fig. 7, and illustrates an appearance in which the thumbnail 11 is reduced.
[Fig. 9] Fig. 9 is a diagram illustrating a configuration example of a mobile information terminal according to another embodiment of the present invention, and illustrates the thumbnail screen 3a on which a thumbnail image 12 in a second stage is arranged in an end part.
[Fig. 10] Fig. 10 is a diagram illustrating a configuration example of a mobile information terminal according to still another embodiment of the present invention, in which the thumbnail screen 3a displayed with a viewpoint being changed is illustrated.

### DESCRIPTION OF REFERENCE NUMERALS

- 1: Cellular phone
- 2: Display housing
- 3: Display
- 3a: Thumbnail screen
- 4: Hinge part
- 5: Operation housing
- 6: Operation key
- 7: Direction key
- 8: Touch pad
- 9: Transmitting microphone
- 10: Receiver
- 11: Thumbnail
- 12: Thumbnail image
- 13: Background plate
- 14: Pointer
- 21: Thumbnail image storage part
- 22: Thumbnail menu display part
- 23: Slide operation detection part
- 24: Pointer display part
- 25: Decision operation detection part
- 26: Thumbnail selection part
- 27: Focus display part
- 28: Menu screen scroll part
- 29: Terminal state determination part
- 30: Mobile information terminal
- 31: Touch panel
- 32: Thumbnail selection part
- 33: Slide operation detection part

## Claims

1. A mobile information terminal comprising:
thumbnail menu display means adapted to sterically arrange many thumbnail images in a same direction in a virtual space to display the thumbnail images on a menu screen as if the thumbnail images are viewed from an oblique direction;
slide operation detection means adapted to detect a slide operation on a pad surface;
pointer display means adapted to, on a basis of the slide operation, move a pointer on the menu screen; and
thumbnail selection means adapted to, on a basis of a decision operation by a user, select the thumbnail image at a position of the pointer.

2. The mobile information terminal according to claim 1, comprising
menu screen scroll means adapted to move the currently displayed thumbnail image in a front-back direction in the virtual space to scroll the menu screen, wherein
the thumbnail menu display means displays the thumbnail image in a forefront stage behind the thumbnail image in a rearmost stage.

3. The mobile information terminal according to claim 1, comprising:
a display on which the menu screen is displayed; and
terminal state determination means adapted to determine whether the display is in a vertically long state or a horizontally long state, wherein
the thumbnail menu display means adjusts an interval between thumbnail images in front and rear stages on a basis of a result of a determination by the terminal state determination means.

4. The mobile information terminal according to claim 1, wherein
the thumbnail menu display means adjusts, on a basis of a user operation, a size of the thumbnail image currently displayed in a forefront stage.

5. The mobile information terminal according to claim 1, wherein
when the thumbnail menu display means displays respective thumbnail images with adding common background plates, the thumbnail menu display means arranges the thumbnail image currently displayed in a forefront stage in a center of the background plate, and arranges the thumbnail image currently displayed in a second or subsequent stage with displacing the thumbnail image to an end part of the background stage.

6. The mobile information terminal according to claim 1, comprising
focus display means adapted to focus-display the thumbnail image selected by the thumbnail selection means, wherein
the thumbnail menu display means changes a viewpoint such that the focus-displayed thumbnail image is positioned on a front side.

7. A mobile information terminal comprising:
thumbnail menu display means adapted to sterically arrange many thumbnail images in a same direction in a virtual space to display the thumbnail images on a menu screen as if the thumbnail images are viewed from an oblique direction;
touch operation detection means adapted to detect a touch operation onto the menu screen; and
thumbnail selection means adapted to, on a basis of a result of a detection of the touch operation, select the thumbnail image.
